# EUROPÄISCHE PATENTSCHRIFT

(11) **EP 0 573 432 B1**
(45) Veröffentlichungstag und Bekanntmachung des Hinweises auf die Patenterteilung: **21.02.1996**
(21) Anmeldenummer: 91919429.0
(22) Anmeldetag: 11.11.1991
(51) Int. Cl.: B66B 5/00, B66B 1/34

(54) **MESSWERTAUFNEHMER ZUM ERFASSEN PHYSIKALISCHER KENNGRÖSSEN EINES PERSONEN- UND/ODER LASTENAUFZUGS**
MEASUREMENT PICK-UP TO DETECT PHYSICAL CHARACTERISTICS OF A LIFT FOR PEOPLE OR FREIGHT
ENREGISTREUR DE DONNEES POUR LA SAISIE DE PARAMETRES PHYSIQUES D'UN ASCENSEUR ET/OU D'UN MONTE-CHARGE

(30) Priorität: 12.11.1990 DE 9015495 U
(43) Veröffentlichungstag der Anmeldung: 15.12.1993
(73) Patentinhaber: Technischer Überwachungs-Verein Bayern Sachsen e.V., D-80686 München (DE)
(72) Erfinder: HOFMANN, Hans, Peter, D-8011 Neukeferloh (DE)
(74) Vertreter: Grünecker, Kinkeldey, Stockmair & Schwanhäusser Anwaltssozietät
(86) Internationale Anmeldenummer: EP9102131
(87) Internationale Veröffentlichungsnummer: WO9208665

(56) Entgegenhaltungen:
- EP-A- 0 390 972
- FR-A- 2 615 842
- GB-A- 2 025 663
- GB-A- 2 201 656
- US-A- 4 401 192
- US-A- 4 512 442

## Beschreibung

Die Erfindung betrifft einen Meßwertaufnehmer zum Erfassen physikalischer Kenngrößen, insbesondere vom Beschleunigungswert, eines Personen- und/oder Lastenaufzugs mit zumindest einem bewegbaren Fahrkorb, wobei der Meßwertaufnehmer einen Sensor und einen diesem zugeordneten Zeitgeber umfaßt und über einen Schhittstellenbaustein mit einer Auswerteeinheit verbindbar ist.

Die Ermittlung solcher Kenngroßen, wie z. B. der Beschleunigung, ist für die regelmäßige Kontrolle von Personen- und Lastenaufzügen unabdingbar. Bei einer aus der EP 0 390 972 A1 bekannten Vorrichtung zur Meßwertaufnahme werden ein oder mehrere Wegaufnehmer als Bewegungssensoren an einem Tragseil angeordnet und so die Geschwindigkeit, Geschwindigkeitsänderungen oder auch die Rutschfestigkeit des von der Treibscheibe angetriebenen Seilzugs ermittelt. Außerdem können auf diese Weise während des Fangvorgangs durch eine mit den Wegaufnehmern in Verbindung stehende Auswerteeinheit und eines entsprechenden Zeitgebers Weg-/Zeitkurven aufgenommen werden, um Aussagen über die Wirksamkeit der Fangvorrichtung Tragseil machen zu können.

Nachteilig bei dieser vorbekannten Vorrichtung ist, daß bei bestimmten Aufzugsarten, wie z. B. bei indirekten hydraulischen Aufzügen mit Bremsfangvorrichtung die Abtastung so nicht möglich ist.

Der Erfindung liegt daher die Aufgabe zugrunde, einen Meßwertaufnehmer der eingangs genanntent Art im Hinblick auf eine einfache Handhabung und vielfältige Einsatzmöglichkeiten unabhängig von den speziellen Eigenschaften des Aufzugs zu verbessern.

Diese Aufgabe wird bei einem Meßwertaufnehmer mit den Merkmalen des Oberbegriffs des Anspruchs 1 dadurch gelöst, daß der Meßwertaufnehmer als transportable, an dem Fahrkorb lösbar befestigte Meßeinheit ausgebildet ist, und einen Zwischenspeicher und einen eine Meßwerterfassung und -speicherung auslösenden Triggerbaustein umfaßt. Gemäß der Erfindung ist so in besonders einfacher Weise z. B. ein Beschleunigungsmesser direkt an dem Fahrkorb, oder dem Gegengewicht sowohl außerhalb als auch innerhalb des Fahrkorbs, befestigbar. Durch den integrierten Zwischenspeicher werden alle Meßwerte während des Meßvorgangs zwischengespeichert. Der Beginn der Meßwertaufzeichnung sowie die entsprechende Meßwertspeicherung erfolgt ab einem bestimmten Wert der Beschleunigung, der durch den Triggerbaustein vorgegeben ist. Auf diese Weise erhält man ein genaues Abbild der Beschleunigung über die Zeit während z. B. des Fangvorgangs. Die Zeitachse wird durch den entsprechenden Zeitgeber realisiert. Nach dem Meßvorgang wird der Meßwertaufnehmer vom Fahrkorb entfernt und mit der Auswerteinheit verbunden.

Wurde ein Fangvorgang aufgezeichnet, so läßt sich aus der Verzögerung des leeren Fahrkorbes mit wirksamen Gegengewicht auf die Verzögerung des mit Nennlast beladenen Fahrkorbes im Freifall umrechnen.

War die Verzögerung über 1g (was sich aus der Aufzeichnung leicht ersehen läßt), so kommt es zu einem Springen des Gegengewichtes. Der Fahrkorb wirkt also folglich nur auf die Fangvorrichtung ohne Beeinflussung des Gegengewichtes. Im Verhältnis Fahrkorbmasse zu Fahrkorbmasse und Nennlast wird nun die Verzögerung von aₗₑₑᵣ auf a_{Nennlast} umgerechnet.

Man kann folglich feststellen, wi der mit Nennlast beladene Fahrkorb im Katastrophenfall (Seilriß) verzögern würde.

Auf diese Weise ist der Meßwertaufnehmer unabhängig von der Auswerteeinheit einsetzbar. Aufwendige Verbindungen zwischen beiden sind unnötig. Auch wäre ein Verbleiben der Auswerteeinheit (Rechner) während des Fangvorgangs nicht ratsam, da die hohen Verzögerungen diesen zerstören könnten. Unabhängig von der Aufzugsart und dessen Antrieb ist der erfindungsgemäße Meßwertaufnehmer vielfältig einsetzbar.

Um einen universellen Einsatz des Meßwertaufnehmers zu ermöglichen, ist es günstig, wenn der Meßwertaufnehmer aus einem aus dem Sensor gebildeten Sensormodul und einem mit diesem verbindbaren, wenigstens den Zwischenspeicher umfassenden Speichermodul gebildet ist. Auf diese Weise ist das Sensormodul in einfacher Weise austauschbar, so daß z. B. statt eines Sensors für Beschleunigungswerte ein Sensor zur Messung von auftretenden Kräften während der Aufzugsbewegung angeschlossen werden kann.

Die Verbindung zwischen Sensormodul und Speichermodul ist als direkte Steckverbindung ausgebildet.

Bei einer vorteilhaften Weiterbildung der Erfindung ist ein dem Sensor zugeordneter Meßverstärker im Sensormodul angeordnet. Eine nachträgliche Verstärkung der Meßsignale ist somit überflüssig und die Signale können direkt gespeichert bzw. von der Auswerteeinheit verarbeitet werden.

Weiterhin ist es günstig, wenn der Triggerbaustein und der Zeitgeber im Speichermodul angeordnet sind. Dadurch ist der gesamte Meßwertaufnehmer sehr kompakt und leicht handhabbar. Der Zeitgeber kann z. B. als integrierter Quarzzeitgeber ausgebildet sein. Zur Umwandlung der analogen Signale des Sensors in digitale Signale ist vorzugsweise ein A/D-Wandler im Speichermodul angeordnet und mit dem Meßverstärker verbunden. Auf diese Weise ist das Speichermodul vielseitig einsetzbar und kann mit jedem Analogsignalgeber verbunden werden.

Um den Beginn der Aufzeichnung bei beliebigen Meßwerten zu starten bzw. zu stoppen, ist es von Vorteil, wenn der Triggerbaustein als variabler Schwellwerttrigger ausgebildet ist.

In diesem Zusammenhang ist es weiterhin günstig, wenn Schwellwertdipschalter zur Schwellwerteinstellung dem Schwellwerttrigger zugeordnet sind. Mit Hilfe der Dipschalter ist eine einfache Einstellung des Triggers möglich, wobei die Schwellwerte in weitem Rahmen wählbar sein können.

Um eine zufällige Verstellung des Schwellwerts z. B. bei einem Einbau des Speichermoduls im Fahrkorb zu verhindern, ist es weiterhin günstig, wenn die Schwellwertdipschalter im Speichermodul angeordnet sind, jedoch so, daß sie über Bohrungen im Gehäuse von außen verstellt werden können.

Um die Einsatzmöglichkeiten des erfindungsgemäßen Meßwertaufnehmern zu erweitern, ist es von Vorteil, wenn ein den Schwellwerttrigger außer Kraft setzendes, externes Triggermodul mit dem Speichermodul über eine Triggerschnittstelle verbunden ist. Man ist somit in der Lage, z. B. durch Aufstecken des Triggermoduls die interne Schwellwerttriggerung abzuschalten und statt dessen durch einen von außen iniziierten Zeitpunkt die Aufzeichnung zu starten. Als Triggermodule sind beispielsweise Funkmodule, Infrarotmodule, Zeitmodule oder Schaltmodule denkbar. Diese sind über entsprechende, von außen kommende Signale einschaltbar und lösen den Meßvorgang aus.

Außerdem ist es günstig, wenn das Triggermodul mit mehreren Meßwertaufnehmern verbunden ist. Auf diese Weise lassen sich mehrere Meßwertaufnehmer über die Triggerschnittstelle koppeln und eine mehrkanalige Aufzeichnung ist möglich. Ein Beispiel für eine mehrkanalige Aufzeichnung wäre z. B. die Messung von Beschleunigungen in allen drei Raumrichtungen.

Bei einer weiteren vorteilhaften Ausführungsform ist der Zeitgeber mit einer variablen Zeitbasis bzw. Abfragetakt ausgebildet. Durch eine Änderung der Zeitbasis besteht die Möglichkeit, nicht nur sehr schnell ablaufende Vorgänge, sondern auch z. B. Fahrkurven eines Aufzugs aufzuzeichnen. Als Aufzeichnungszeiträume sind Sekunden bis zu Tagen mit einer Aufzeichnungsdichte von z. B. 10 000 Messungen pro Sekunde bis 30 Messungen pro Minute denkbar.

Dabei ist es insbesondere günstig, wenn dem Zeitgeber zur Änderung der Zeitbasis bzw. des Abfragetakts Zeitdipschalter zugeordnet sind. So ist eine einfache Einstellung der Zeitbasis gegeben, wobei gleichzeitig die Stellung der Dipschalter als Anzeige für die eingestellte Zeitbasis nutzbar ist.

Auch diese Dipschalter sind im Speichermodul angeordnet und ebenso wie die Schwellwertschalter von außen zugänglich.

Um das Speichermodul in einfacher Weise und mit einer Vielzahl von Auswerteeinheiten verbinden zu können, ist es günstig, wenn der Schnittstellenbaustein im Speichermodul angeordnet ist, und als Standardschnittstelle ausgebildet ist. Auf diese Weise ist die Abfrage des Speichers vereinfacht und gleichzeitig kann die Auswerteeihheit ein fast beliebiger Computer sein, der über eine entsprechende Schnittstelle verfügt.

Durch eine entsprechende Programmierung der Auswerteeinheit ist es weiterhin vorteilhaft möglich, die Auswerteeinheit zur Voreinstellung von Schwellwerttrigger und/oder Zeitgeber zu nutzen, sowie zum Abrufen der gespeicherten Meßwerte über den Schnittstellehbaustein mit dem Speichermodul zu verbinden. In diesem Fall sind die entsprechenden Dipschalter außer Kraft gesetzt, und die Einstellung von Schwellwert und Zeitbasis erfolgt durch die Auswerteeinheit direkt. Die Standardschnittstelle kann eine übliche RS-232 oder Centroniosschnittstelle sein. Die Auswerteeinheit ist mit entsprechender Software in der Lage, die aufgezeichneten Werte auszulesen und entsprechend weiterzuverarbeiten. Es ist z. B. eine graphische Darstellung der Meßwerte möglich, an der z. B. mittels eines Cursors Marken gesetzt werden können, die dann zu einer entsprechenden Mittelwertberechnung herangezogen werden. Aufgrund dieser berechneten Werte läßt sich dann eine Aussage über die Wirksamkeit der Fangvorrichtung machen.

Um das Speichermodul unabhängig von äußeren Spannungsquellen auszubilden, ist es weiterhin günstig, einen Modulspannungsversorger innerhalb und einen zugeordneten Schalter von außerhalb des Speichermoduls erreichbar anzuordnen. Bei der heutzutage üblichen Realisierung von Speichereinrichtungen, Triggern, Zeitgebern und dergleichen auf Halbleiterbasis ist z. B. eine Spannungsversorgung mit Hilfe von Batterien möglich.

In diesem Zusammenhang ist es günstig, wenn die mit dem Speichermodul verbundenen Module auch an der Modulspannungsversorgung angeschlossen sind. Über die entsprechenden Verbindungen der Module werden so auch das Sensormodul bzw. das Triggermodul versorgt.

Um eventuell noch gespeicherte Werte oder andere durch die Auswerteeinheit programmierte Werte, wie z. B. Zeitbasis und Schwellwert, bei einem neuen Einsatz des Meßwertaufnehmers zu löschen, ist es von Vorteil, wenn der Schalter der Spannungsversorgung zum Zurücksetzen der Module in den Ausgangszustand beim Einschalten als Resetschalter ausgebildet ist.

Weiterhin erweist es sich als günstig, wenn ein Microprozessor zur Steuerung der Meßwertaufnahme und der Speicherung im Speichermodul angeordnet ist.

Allgemein ist durch die Trennung von Sensor- und Speichermodul weiterhin die Möglichkeit gegeben, nicht nur Beschleunigungswerte, sondern beliebige andere Meßwerte von Sensoren zu erfassen. Auch ist der Einsatz des Meßwertaufnehmers natürlich nicht auf Aufzüge beschränkt sondern kann auch an Fahrzeugen oder anderen bewegten wie auch unbewegten Gegenständen eingesetzt werden. Ebenso kann das universelle Speichermodul mit Temperatur-, Beleuchtungsstärke-, Gassenor- oder Strahlungsmodulen verbunden werden.

Die erfindungsgemäß vorgeschlagene Lösung und ein vorteilhaftes Ausführungsbeispiel davon wird im folgenden anhand der in der Zeichnung dargestellten Figuren weiter erläutert und beschrieben.

Es zeigen:
- **Figur 1**: einen Personen- bzw. Lastenaufzug mit dem erfindungsgemäßen Meßwertaufnehmer;
- **Figur 2**: den erfindungsgemäßen Meßwertaufnehmer mit in prinzipieller logischer Darstellung, und
- **Figur 3**: eine Ausführungsform des Speichermoduls in Prozessortechnik.

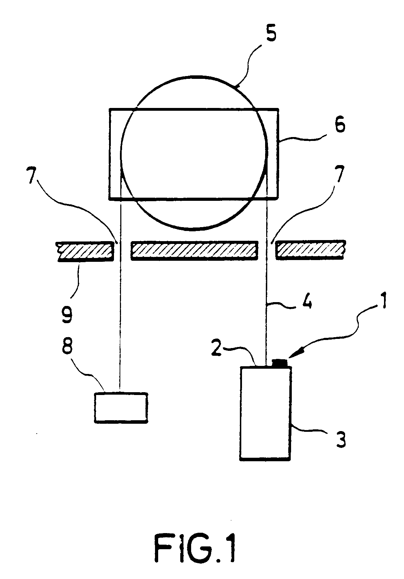

In Figur 1 ist ein Meßwertaufnehmer 1 auf einer Oberseite 2 eines Fahrkorbs 3 dargestellt. Der Fahrkorb 3 ist über ein Seil 4 mit einem Gegengewicht 8 verbunden, das in etwa in gleicher Höhe wie der Fahrkorb angeordnet ist. Mit Hilfe einer Motor-Getriebe-Bremseneinheit 6 ist das Seil 4 mit Hilfe einer Treibscheibe 5 entweder in Richtung des Fahrkorbs 3 bzw. des Gegengewichts 8 bewegbar. Die Motor-Getriebe-Bremseneinheit 6 ist durch eine Decke 9 vom Fahrkorb getrennt, im allgemeinen im obersten Teil eines Gebäudes oder auf dessen Dach angeordnet. In der Decke 9 sind Öffnungen 7 zum Durchlaß des Seils 4 ausgebildet.

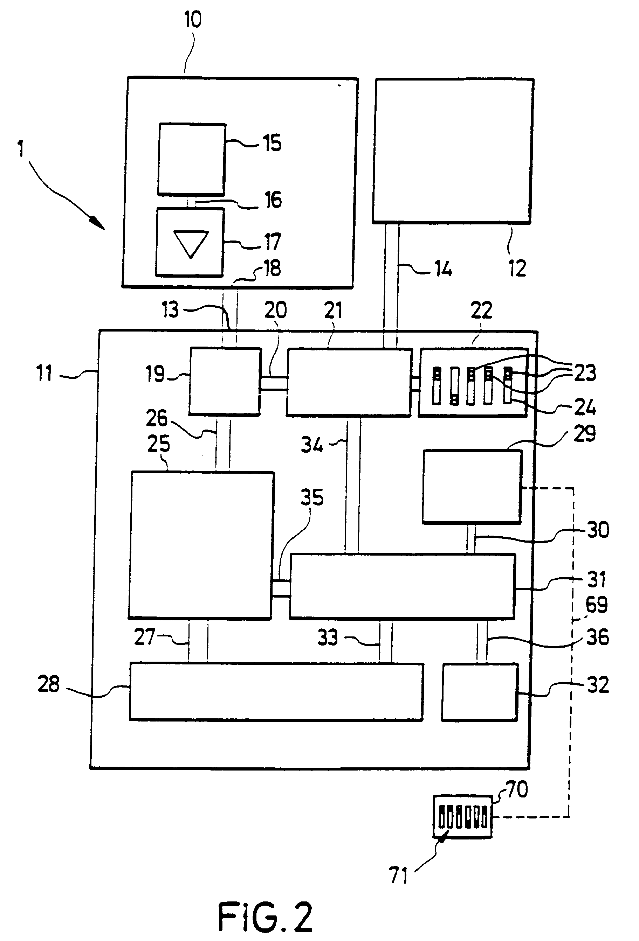

In Figur 2 ist der Meßwertaufnehmer 1 in Form logischen Funktionsgruppen dargestellt.

In der hier dargestellten Form umfaßt der Meßwertaufnehmer 1 drei Module 10, 11 und 12. Das Modul 10 ist als Sensormodul ausgebildet. In seinem Inneren ist ein Sensor 15, wie z. B. ein Beschleunigungssensor, uber eine Verbindungsleitung 16 mit einem Meßverstärker 17 verbunden. Mit Hilfe eines Steckers 18 ist das Sensormodul 10 am Speichermodul 11 anschließbar.

Im Speichermodul ist der Stecker 13/18 mit einem A/D-Wandler 19 verbunden. Über eine Verbindung 26 sind die vom A/D-Wandler 19 aufgenommenen und verarbeiteten Meßwerte an einen Speicherbaustein 25 übertragbar. Dieser ist so ausgebildet, daß sowohl Daten aus- als auch eingelesen werden können.

Über eine weitere Verbindungsleitung 20 ist der A/D-Wandler 19 mit einem Schwellwerttrigger 21 verbunden. Der entsprechende Schwellwert ist in der Schwellwertvorgabe 22 einstellbar. Diese weist eine Anzahl von Dipschaltern 23 auf, die entlang von Führungen 24 verstellbar sind. An dem Schwellwerttrigger 21 ist über eine Triggerschnittstelle 14 ein externes Triggermodul 12 anschließbar. Bei Anschluß dieses Moduls ist der Schwellwerttrigger 21 wirkungslos. Die Aufzeichnung wird dann vom externen Triggermodul 12 gestartet. Ein externes Triggermodul 12 ist auch in der Lage, mehrere Speichermodule 11 gleichzeitig zu starten.

Der Schwellwerttrigger 21 ist zusätzlich über eine Verbindung 34 mit einer Zentraleinheit 31 verbunden, die sowohl einen Adressdecoder als auch eine Einheit zum Schreiben bzw. Lesen der mit ihr verbundenen Einrichtungen enthält. Sie ist außerdem über eine Verbindung 35 mit dem Speicherbauteil 25, über eine Verbindung 30 mit einer Zeitbasis 29, über eine Verbindung 36 mit einem Resetschalter 32 und über eine Verbindung mit einer Rechnerschnittstelle 28 verbunden. Mit Hilfe der Verbindung 33 steuert die Zentraleinheit 31 über die Rechnerschnittstelle 28 auch den Datenfluß von Meßwerten entlang die Verbindung 27 zwischen Speicherbaustein 25 und Rechherschnittstelle 28.

Die Zeitbasis 29 taktet über die Verbindung 30 die Zentraleinheit 31 sowie die damit angeschlossenen Bauteil und bestimmt so den Abfragetakt der durch den Sensor 15 aufgenommenen Meßdaten. Mit der Zeitbasis 29 ist über eine Verbindung 69 eine Zeitbasisvorgabe 70 verbunden. Diese weist ähnlich der Schwellwertvorgabe 22 eine Anzahl von Dipschaltern 71 auf. Die Stellung der Dipschalter 71 bestimmt den Abfragetakt der Zeitbasis 29.

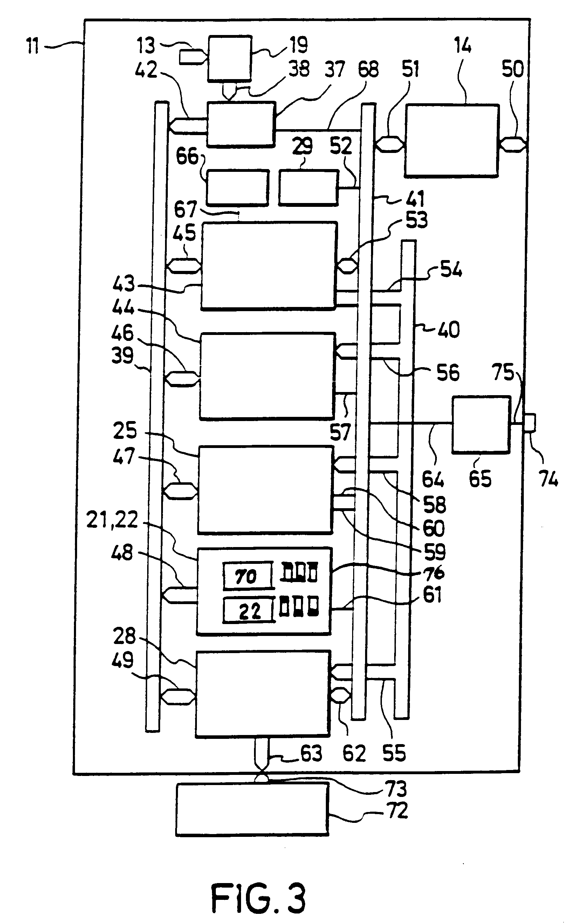

In Figur 3 ist eine Ausführungsform des Speichermoduls 11 in Prozessortechnik prinzipiell dargestellt. Teile, die Teilen aus Figur 2 entsprechen, sind mit den gleichen Bezugszeichen versehen.

Im Speichermodul 11 sind im wesentlichen als Rechtecke dargestellte Bausteine spaltenförmig angeordnet, die eine Reihe von Verbindungen zu entlang ihrer kürzeren Rechtecksseiten verlaufenden Bussen aufweisen. Mit dem Stecker 13/18 ist der A/D-Wandler 19 zur Umwandlung der analogen Signale in digitale Signale verbunden. Zwische diesem und dem Datenbus 39 ist ein Freigabebaustein 37 angeordnet, der über Leitung 38 mit dem Wandler 19 bzw. Leitung 42 mit dem Datenbus 39 verbunden ist. Nur bei Freigabe (enable) durch den Freigabebaustein 37 sind die Meßwerte über den Datenbus 39 weiterleitbar. Zum Auslösen der Freigabe ist der Freigabebaustein 37 über eine Verbindungsleitung 68 mit einem Steuerbus 41 verbunden.

Über den Datenbus 39, der z. B. als 8-Bit breiter Datenbus ausgebildet sein kann, sind die Meßwerte zum Speicherbaustein 25 transportierbar und dort zwischenspeicherbar. Zu diesem Zweck sind Datenbus 39 und Speicherbaustein 25 mit Hilfe der Verbindungsleitung 47 verbunden. Der Speicherbaustein (Arbeitsspeicher 25) selbst ist ein sogenannter Speicherbaustein mit wahlfreiem Zugriff (RAM). Dieser kann beschrieben und gelesen werden.

Der Schreib- bzw. Lesevorgang ist von einem Microprozessor 43 steuerbar. Dieser ist sowohl über eine Verbindung 45 mit dem Datenbus 39 als auch über Verbindungen 53 und 54 mit einem Steuerbus 41 bzw. Adressbus 40 verbunden. Zur Vorgabe der Zeitabstände, in denen der Microprozessor 43 Instruktionen ausführt, ist dieser über eine weitere Verbindung 67 mit dem Taktgeber 66 verbunden.

Zwischen Microprozessor 43 und RAM-Baustein 25 ist ein Festwertspeicher 44 angeordnet. In diesem ist das Programm für den Microprozessor gespeichert. Durch eine Auswahlleitung 57 ist der Festwertspeicher 44 mit dem Steuerbus 41 verbunden. Zusätzlich sind Anschlüsse 56 und 46 zum Adressbus 40 bzw. zum Datenbus 39 vorhanden.

Eine entsprechende Auswahlleitung 60 ist auch zwischen Arbeitsspeicher 25 und Steuerbus 41 ausgebildet. Zusätzlich ist eine zur Auswahlleitung 60 parallel angeordnete Schreib/Leseleitung 59 zwischen dem Arbeitsspeicher 25 und dem Steuerbus 41 angeordnet. Um den Arbeitsspeicher 25 mit Hilfe des Microprozessors 43 adressieren zu können, ist zwischen Adressbus 40 und Arbeitsspeicher 25 eine Adressierverbindung 58 angeordnet.

Direkt unterhalb des Arbeitsspeichers 25 ist die Einstelleinheit 76 angeordnet. Diese umfaßt sowohl die schaltbare Schwellwertvorgabe 22 als auch die Zeitbasisvorgabe 70 gemäß Figur 2. Zur Verbindung mit dem Datenbus 39 bzw. dem Steuerbus 41 ist die Schwellwertvorgabe 21, 22 mit diesen durch Verbindungen 48 bzw. Auswahlleitung 61 verbunden.

Ein Schnittstellenbaustein 28 bildet am unteren Ende der Spalte der Bausteine einen Baustein zur Regelung der Eingabe bzw. Ausgabe von Daten. Dazu ist dieser mit allen Bussen über Leitungen 49, 55 und 62 verbunden. Außerdem ist über die Verbindung 63 der Kontakt zu einer Auswerteinheit 72 herstellbar. Die Leitungen 63 sind bis zur Außenseite des Sensormoduls 11 durchgeführt, wo sie mit einer an der Auswerteinheit 72 ausgebildeten Leitungen 73 verbindbar sind. Die Schnittstelle ist als sogenannte Standardschnittstelle ausgebildet, die Daten je nach Ausbildungsform seriell bzw. parallel ausgibt und empfängt.

Benachbart zum Systemzeitgeber 66 ist die Zeitbasis 29 angeordnet. Diese ist über eine Taktleitung 52 mit dem Steuerbus 41 verbunden und dient dazu, in Verbindung mit der Zeitbasisvorgabe 70 bzw. einem vorher von der Auswerteeinheit 72 übermittelten Zeitbasis den Takt festzulegen, in welchem die Zentraleinheit mit Hilfe des Freigabebausteins 37 auf Daten des A/D-Wandlers 19 zugreift.

Außerdem ist mit dem Steuerbus 41 über eine Verbindungsleitung 51 eine Triggerschnittstelle 14 verbunden. Mit dieser sind die Leitungen 50 verbunden, die bis an die Außenseite des Speichermoduls 11 durchgeführt sind und zur Verbindung mit dem in Figur 2 dargestellten externen Triggermodul 12 dienen. Über die Leitung 51 und 50 ist außerdem der Abfragetakt über den Steuerbus 41 von der Zeitbasis abfragbar herausgeführt.

Zur Versorgung aller Bauelemente mit der notwendigen Spannung ist innerhalb des Speichermoduls 11 eine Modulspannungsversorgung 65 angeordnet. Diese ist mit Hilfe einer Leitung 64 mit dem Steuerbus 41 verbunden und versorgt sowohl alle Bausteine des Speichermoduls als auch die Bausteine von möglicherweise extern angeschlossenen, weiteren Modulen. Zum Einschalten des Speichermoduls 11 ist die Modulspannungsversorgung 65 über eine Leitung 75 mit einem von der Außenseite des Speichermoduls 11 erreichbaren Schalter 74 verbunden.

Allgemein ist bei der Darstellung gemäß Figur 3 zu beachten, daß bei allen pfeilförmig zulaufenden Verbindungsleitungen die Pfeilrichtung die Richtung des Datentransfers kennzeichnet. So ist z. B. bezüglich der Schwellwertvorgabe 22 nur ein Abfragen des Schwellwertes über den Datenbus 39 und die Verbindungsleitung 48 möglich. Während z. B. der Arbeitsspeicher 25 über den Datenbus 39 sowohl Daten aufnimmt als auch abgibt und über die Verbindungsleitung 58 zum Adressbus 40 vom Microprozessor 43 angesprochen werden kann.

Im folgenden wird das Zusammenwirken der einzelnen Bausteine beschrieben.

Nach dem Einschalten des Speichermcduls 11 mit Hilfe des Schalters 74 wird durch den Microprozessor 43 das Einlesen des Schwellwerts sowie des Abfragetaktes für die Zeitbasis 29 veranlaßt. Dies geschieht über die Schnittstelle 28 aus der mit dieser verbundenen Auswerteeinheit 72. Werden keine Werte für Schwellwert und Abfragetakt eingelesen, die Auswerteeinheit 72 also nicht angeschlossten ist, so gelten die Werte, durch die entsprechenden Dipschaltereinrichtungen 22 und 70 eingestellt sind.

Falls an dem Stecker 13/18 ein entsprechendes Sensormodul 10 angeschlossen ist, fragt der Microprozessor 43 im Abfragetakt den A/D-Wandler 19 ab.

Ist ein externes Triggermodul aktiv, d. h. mit der Triggermodulschnittstelle 14 verbunden, so gibt dieses einen Schwellwert vor. Andernfalls wird der Schwellwert aus der Schwellwertvorgabe 22 abgefragt, bzw. die vorher vom Rechner übermittelten Schwellwerte eingesetzt. Die von dem A/D-Wandler 19 abgefragten Meßwerte werden mit der entsprechenden Schwellwertvorgabe verglichen und sobald ein Meßwert in einer vorbestimmten Relation (gleich, kleiner, größer) zum Schwellwert ist, wird die Aufzeichnung in den Arbeitsspeicher 25 gestartet.

Alle Daten werden im Arbeitsspeicher gespeichert, solange bis dieser voll ist bzw. bis über die Schnittstelle 28 eine Anfrage der Auswerteeinheit 72 erfolgt. Falls der Arbeitsspeicher voll ist, bevor eine entsprechende Anfrage durch die Auswerteeinheit 72 erfolgt, so bleibt der Microprozessor solange in Warteposition, bis die erforderliche Anfrage erfolgt, bzw. das Speichermodul 11 abgeschaltet wird. Erfolgt eine Anfrage an die Schnittstelle 28, so wird der Inhalt des Arbeitsspeichers 25 an die anfragende Auswerteeinheit 72 über die Verbindungen 63 und 73 übertragen.

## Patentansprüche

1. Meßwertaufnehmer (1) zum Erfassen physikalischer Kenngrößen, insbesondere von Beschleunigungswerten, eines Personen- und/oder Lastenaufzugs mit zumindest einem bewegbarem Fahrkorb (3), wobei der Meßwertaufnehmer (1) einen Sensor (15) und einen diesem zugeordneten Zeitgeber (29) umfaßt und über einen Schnittstellenbaustein (28) mit einer Auswerteeinheit (72) verbindbar ist, **dadurch gekennzeichnet,** daß der Meßwertaufnehmer (1) als transportable, an dem Fahrkorb lösbar befestigte Meßeinheit (10, 11, 12) ausgebildet ist und einen Zwischenspeicher (25) und einen die Meßwerterfassung und -speicherung auslösenden Triggerbaustein (21) umfaßt.

2. Meßwertaufnehmer nach Anspruch 1, **dadurch gekennzeichnet,** daß der Meßwertaufnehmer (1) aus einem aus dem Sensor gebildeten Sensormodul (10) und einem mit diesem verbindbaren, wenigstens den Zwischenspeicher (25) umfassenden Speichermodul (11) gebildet ist.

3. Meßwertaufnehmer nach wenigstens einem der vorangehenden Ansprüche, **dadurch gekennzeichnet,** daß der Triggerbaustein (21) als variabler Schwellwerttrigger ausgebildet ist.

4. Meßwertaufnehmer nach Anspruch 3, **dadurch gekennzeichnet,** daß Schwellwertdipschalter (23) zur Schwellwerteinstellung dem Schwellwerttrigger (21) zugeordnet sind.

5. Meßwertaufnehmer nach wenigstens einem der vorangehenden Ansprüche, **dadurch gekennzeichnet,** daß ein den Schwellwerttrigger (21) außer Kraft setzendes, externes Triggermodul (12) mit dem Speichermodul (11) über eine Triggerschnittstelle (14) verbunden ist.

6. Meßwertaufnehmer nach Anspruch 5, **dadurch gekennzeichnet,** daß das Triggermodul (12) mit mehreren Meßwertaufnehmern (1) verbunden ist.

7. Meßwertaufnehmer nach wenigstens einem der vorangehenden Ansprüche, **dadurch gekennzeichnet,** daß der Zeitgeber (29) mit einer variablen Zeitbasis bzw. Abfragetakt ausgebildet ist.

8. Meßwertaufnehmer nach wenigstens einem der vorangehenden Ansprüche, **dadurch gekennzeichnet,** daß die Auswerteeinheit (72) zur Voreinstellung von Schwellwerttrigger und/oder Zeitgeber (29) sowie zum Abrufen der gespeicherten Meßwerte über einen Schnittstellenbaustein (28) mit dem Speichermodul (11) verbunden ist.

9. Meßwertaufnehmer nach Anspruch 8, **dadurch gekennzeichnet,** daß die mit dem Speichermodul (11) verbundenen Module (10, 12) an einer Modulspannungsversorgung (65) angeschlossen sind.

## Claims

1. A transducer (1) for the detection of physical parameters, in particular acceleration values, of a passenger- and/or goods lift with at least one moveable cage (3), where the transducer (1) comprises a sensor (15) and a timer (29) assigned to said sensor and can be connected to an analysis unit (72) via an interface (28), characterised in that the transducer (1) is designed as a transportable measuring unit (10, 11, 12) detachably fixed to the cage and comprises an intermediate storage (25) and a trigger unit (21) which triggers the detection and storage of the measured values.

2. A transducer as claimed in Claim 1, characterised in that the transducer (1) consists of a sensor module (10) formed by the sensor and of a storage module (11) which is connected to said sensor module and at least comprises the intermediate storage (25).

3. A transducer as claimed in at least one of the preceding claims, characterised in that the trigger unit (21) is designed as a variable threshold value trigger.

4. A transducer as claimed in Claim 3, characterised in that threshold value DIP switches (23) for the setting of the threshold values are assigned to the threshold value trigger (21).

5. A transducer as claimed in at least one of the preceding claims, characterised in that an external trigger module (12) which de-activates the threshold value trigger (21) is connected to the storage module (11) via a trigger interface (14).

6. A transducer as claimed in Claim 5, characterised in that the trigger module (12) is connected to a plurality of transducers (1).

7. A transducer as claimed in at least one of the preceding claims, characterised in that the timer (29) is designed with a variable time base and interrogation clock cycle.

8. A transducer as claimed in at least one of the preceding claims, characterised in that the analysis unit (72) which serves for the presetting of threshold value trigger and/or timer (29) and for the call-up of the stored measured values is connected to the storage module (11) via an interface unit (28).

9. A transducer as claimed in Claim 8, characterised in that the modules (10, 12) connected to the storage module (11) are connected to a module voltage supply device (65).

## Revendications

1. Détecteur (1) de valeurs de mesure pour saisir des paramètres physiques, en particulier des valeurs d'accélération, d'un ascenseur et/ou d'un monte-charge comportant au moins une cabine mobile (3), le détecteur (1) de valeurs de mesure comportant un capteur (15) et un émetteur de temps (29) qui lui est associé et pouvant être relié à une unité de traitement (72) par l'intermédiaire d'un élément d'interface (28), caractérisé par le fait que le détecteur (1) de valeurs de mesure est conçu sous forme d'une unité de mesure (10, 11, 12) transportable, fixée, de façon amovible, à la cabine et comporte une mémoire intermédiaire (25) et un élément de déclenchement (21) qui déclenche la saisie et la mémorisation des valeurs de mesure.

2. Détecteur de valeurs de mesure selon la revendication 1, caractérisé par le fait que le détecteur (1) de valeurs de mesure est formé d'un module capteur (10), formé du capteur, et d'un module mémoire (12) qui peut lui être relié et contient au moins la mémoire intermédiaire (25).

3. Détecteur de valeurs de mesure selon au moins l'une des revendications précédentes, caractérisé par le fait que l'élément de déclenchement (21) est conçu sous forme de déclencheur à valeur de seuil variable.

4. Détecteur de valeurs de mesure selon la revendication 3, caractérisé par le fait que des commutateurs "DIP" (23) pour valeur de seuil sont associés au déclencheur à valeur de seuil (21), pour prescrire la valeur de seuil.

5. Détecteur de valeurs de mesure selon au moins l'une des revendications précédentes, caractérisé par le fait qu'un module déclencheur extérieur (12), mettant hors circuit le déclencheur à valeur de seuil (21) est relié au module mémoire (11) par une interface de déclenchement (14).

6. Détecteurs de valeurs de mesure selon la revendication 5, caractérisé par le fait que le module déclencheur (12) est relié à plusieurs détecteurs (1) de valeurs de mesure.

7. Détecteur de valeurs de mesure selon au moins l'une des revendications précédentes, caractérisé par le fait que l'émetteur de temps (29) est prévu avec une base de temps variable ou une cadence d'interrogation variable.

8. Détecteur de valeurs de mesure selon au moins l'une des revendications précédentes, caractérisé par le fait que pour le réglage préalable du déclencheur à valeur de seuil et/ou de l'émetteur de temps (29) ainsi que pour l'appel des valeurs de mesure mémorisées, l'unité de traitement (72) est reliée au module mémoire (11) par un élément d'interface (28).

9. Détecteur de valeurs de mesure selon la revendication 8, caractérisé par le fait que les modules (10, 12) reliés au module mémoire (11) sont reliés à une alimentation en tension (65) du module.
